(19) Europäisches Patentamt
European Patent Office
Office européen des brevets

(11) **EP 2 991 838 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(21) Anmeldenummer: **14722151.9**

(22) Anmeldetag: **29.04.2014**

(51) Int Cl.:
**B42D 25/00** (2014.01)

(86) Internationale Anmeldenummer:
**PCT/EP2014/058728**

(87) Internationale Veröffentlichungsnummer:
**WO 2014/177564 (06.11.2014 Gazette 2014/45)**

(54) **SICHERHEITS- ODER WERTPRODUKT MIT ELEKTROLUNINESZIERENDEM SICHERHEITSELEMENT UND VERFAHREN ZUR HERSTELLUNG DESSELBEN**

SECURITY PRODUCT OR VALUABLE PRODUCT HAVING AN ELECTROLUMINESCENT SECURITY ELEMENT AND METHOD FOR THE PRODUCTION THEREOF

PRODUIT DE SÉCURITÉ OU DE VALEUR DOTÉ D'UN ÉLÉMENT DE SÉCURITÉ ÉLECTROLUMINESCENT ET PROCÉDÉ DE PRODUCTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2013 DE 102013207998**

(43) Veröffentlichungstag der Anmeldung:
**09.03.2016 Patentblatt 2016/10**

(73) Patentinhaber: **Bundesdruckerei GmbH**
**10969 Berlin (DE)**

(72) Erfinder:
• **FISCHER, Jörg**
**13053 Berlin (DE)**
• **TIETKE, Markus**
**12169 Berlin (DE)**
• **PAESCHKE, Manfred**
**16348 Wandlitz (DE)**

(74) Vertreter: **Gulde & Partner**
**Patent- und Rechtsanwaltskanzlei mbB**
**Wallstraße 58/59**
**10179 Berlin (DE)**

(56) Entgegenhaltungen:
**WO-A1-2008/143636 DE-A1- 19 645 084**
**US-A- 5 690 366**

EP 2 991 838 B1

## Beschreibung

Die Erfindung betrifft ein Sicherheits- oder Wertprodukt mit einem elektrolumineszierenden Sicherheitselement. Ferner betrifft die Erfindung ein dazugehöriges Herstellungsverfahren.

## Technologischer Hintergrund

Sicherheits- und/oder Wertprodukte, wie beispielsweise Personaldokumente, Zutrittskontrollausweise, Kraftfahrzeugdokumente, Banknoten, Briefmarken, Steuerzeichen, Visa, Tickets oder Bankkarten, weisen in der Regel definierte Sicherheitsmerkmale auf, die das Fälschen erschweren oder gar unmöglich machen sollen. Bei den von Menschen erkennbaren Sicherheitsmerkmalen kann man in optische, haptische und akustische Sicherheitsmerkmale unterteilen. Die nachfolgend noch näher erläuterten erfindungsgemäßen Sicherheitsund/oder Wertdokumente weisen ein optisches Sicherheitsmerkmal auf.

DE 10 2009 038 904 A1 beschreibt Wert- oder Sicherheitsprodukte mit einem elektrolumineszierenden Sicherheitselement, das als organische Leuchtdiode (OLED) ausgeführt ist. Das dort beschriebene OLED ist in einer speziellen Sandwichstruktur verkapselt, um es vor Umwelteinflüssen zu schützen. OLEDs benötigen allerdings relativ hohe Betriebsspannungen, so dass entweder Anschlüsse für eine externe Spannungsversorgung notwendig sind oder entsprechend ausgelegte Energiespeicher zur Bereitstellung der Betriebsspannung in das Sicherheits- oder Wertprodukt integriert werden müssen. Zu beachten ist ferner, dass bekannte OLEDs unter Gleichspannung zu betreiben sind, so dass bei passiver Spannungsversorgung ein Gleichrichter notwendig wäre. Weiterhin sind OLED-Bauelemente gegenüber mechanischen Belastungen empfindlich und damit ist der Einsatz in Wert- und Sicherheitsprodukten, insbesondere in Banknoten, Briefmarken und Tickets, beschränkt. Bei mechanischer Beanspruchung können beispielsweise Mikrorisse in der Verkapselung auftreten und da die aktiven Elemente des OLEDs, insbesondere die Elektrode, keinen weiteren Schutzschichten aufweisen, kann in der Folge durch eindringendes Wasser und Sauerstoff sehr schnell die Funktionalität des Bauelements herabgesetzt oder völlig zerstört werden. Schließlich ist für den Betrieb von herkömmlichen OLEDs eine relativ hohe Austrittsarbeit zu leisten, was unter anderem die Materialwahl für die Elektroden mitbestimmt. Es wäre daher vorteilhaft, ein Sicherheits- oder Wertprodukt mit einem elektrolumineszierenden Sicherheitselement bereitzustellen, das die vorgenannten Nachteile des Standes der Technik überwindet oder zumindest mindert.

Dokument DE 196 45 084 A1 offenbart ein Sicherheits- oder Wertprodukt nach dem Oberbegriff des Anspruchs 1.

## Zusammenfassung der Erfindung

Zumindest einige der Limitierungen des Standes der Technik lassen sich mit Hilfe des erfindungsgemäßen Sicherheits- oder Wertproduktes mit einem passiven, elektrolumineszierenden Sicherheitselement beheben oder zumindest mindern. Das elektrolumineszierende Sicherheitselement umfasst dazu ein feldinduziertes elektrolumineszierendes Bauelement (EL-Bauelement). Das EL-Bauelement enthält eine zwischen zwei Elektroden angeordnete elektrolumineszierende Verbundschicht, die zumindest einen in ein transparentes dielektrisches Material eingebetteten elektrolumineszierenden Farbstoff aufweist. Die Verbundschicht besteht aus nur einer einzigen Schicht, die direkt an die Elektroden grenzt.

Der Erfindung liegt die Erkenntnis zugrunde, dass sich gerade für Wert- oder Sicherheitsprodukte der Einsatz eines passiven, elektrolumineszierenden Sicherheitselements eignet, das als feldinduziertes elektrolumineszierendes Bauelement ausgeführt ist. Mit anderen Worten, das Wert- oder Sicherheitsprodukt enthält als optisches Sicherheitselement ein EL-Bauelement, das induktiv zur Lichtemission angeregt werden kann. EL-Bauelemente zeichnen sich dadurch aus, dass die elektrolumineszierenden Farbstoffe in eine dielektrische Matrix eingebettet sind, so dass auf eine zusätzliche Verkapselung des gesamten Sicherheitselementes verzichtet werden kann. Darüber hinaus lassen sich EL-Bauelemente mit Wechselstrom betreiben, so dass eine einfache, passive Energieversorgung über eine in das Wert- oder Sicherheitsprodukte integrierte Antenne erfolgen kann. Schließlich sind keine hohen Austrittsspannungen zum Betrieb der EL-Bauelemente notwendig und damit ist die Wahl des Elektrodenmaterials wesentlich variabler, so dass beispielsweise auf brüchige Werkstoffe oder gegenüber Oxidation der Wasser empfindliche Werkstoffe verzichtet werden kann. Ein derartiges EL-Bauelement kann insbesondere ein sogenanntes FIPEL-Bauelement (engl. field-induced polymer electroluminescent FIPEL) sein, bei dem als dielektrische Matrix ein Polymer dient.

Das erfindungsgemäße EL-Bauelement enthält eine zwischen zwei Elektroden angeordnete elektrolumineszierende Verbundschicht, die vorliegend jedoch nur aus einer einzigen Schicht aus dielektrischer Matrix mit eingebettetem elektrolumineszierenden Farbstoff(en) besteht. Die Schicht grenzt direkt an die Elektroden, steht also in unmittelbarem Kontakt mit den Elektroden. Der Aufbau des erfindungsgemäßen EL-Bauelements ist damit sehr kompakt und auf wenige wesentliche Bestandteile beschränkt, so dass eine für die Applikation in Wertund Sicherheitsdokumenten sehr robuste Ausführungsform bereitsteht. Zudem ist das Herstellungsverfahren wesentlich vereinfacht.

Das Funktionsprinzip eines feldinduzierten EL-Bauelements, insbesondere FIPEL-Bauelementes, ist aus dem Stand der Technik bekannt und beispielsweise in EP 2 078 068 B1 ausführlich beschrieben. Das EL-Bauelement weist eine zwischen zwei Elektroden angeordnete elektrolumineszierende Verbundschicht auf, die zumindest ein in ein transparentes dielektrisches (Polymer-)material eingebetteten elektrolumineszierenden Farbstoff enthält. In der Regel werden der Verbundschicht Additive zugesetzt, die der Verstärkung des durch Anlegen einer Spannung zwischen den Elektroden erzeugten elektrischen Feldes dienen.

Geeignete Additive im vorgenannten Sinne umfassen insbesondere Kohlenstoff-Nanoröhrchen (CNTs) deren Zusatz die Leuchtdichte der elektrolumineszierenden Farbstoffe deutlich steigert. Weitere geeignete Additive lassen sich insbesondere den Absätzen [0028] bis [0039] der EP 2 078 068 B1 entnehmen, deren Inhalt hiermit vollumfänglich einbezogen wird.

Geeignete elektrolumineszierende Farbstoffe für das feldinduzierte EL-Bauelement umfassen anorganische, organische oder metall-organische Verbindungen oder Quantenpunkte. Insbesondere ist der elektrolumineszierende Farbstoff eine organische oder metall-organische Verbindung, die beispielsweise zu gleichen Zwecken in OLEDs Einsatz findet.

Beispiele geeigneter nicht-polymerer, organischer und metall-organischer Farbstoffe (sogenannte small molecules) umfassen N,N-Diphenylaniline und Derivate hiervon, 9-H-Flourene und Derivate hiervon, Anthracene und Derivate hiervon, 4,4'-Bis[(9-ethyl-3-carbazoyl)-vinylenyl)]-anthracen, 9,10-Bis(9-ethyl-3-carbazovinylen)-1,1'-biphenyl, 4,4'-Bis(diphenylvinylenyl)-biphenyl, 1,4-Bis(9-ethyl-3-carbazovinylen)-2-methoxy-5-(2-thylhexyloxy)-benzol, 4,4'-Bis(diphenylvinylenyl)-anthracen, 1,4-Bis(9-ethyl-3-carbazovinylen)-9,9-dihexyl-fluoren, 9,9,9',9',9'',9''-Hexakis(hexyl)-2,7',2',7''-trifluoren, analoge Penta- und Heptaflourene, 9,9,9',9',9'',9''-Hexakis(octyl)-2,7',2',7''-trifluoren, analoge Penta- und Heptaflourene, 3,7-Bis-(9,9-di-n-hexylflouren-2-yl)-dibenzothiophen-S-S-dioxid, 2,7-Bis-[7-(9,9-di-n-hexylflouren-2-yl)-dibenzothiophen-S-S-dioxid-3-yl]-9,9-di-n-hexylfluoren, Tetra(2-methyl-8-hydroxyquinolinato)borat, Tetra(8-hydroxyquinolinato)borat, Bis(8-hydroxyquinoline)zink, Bis(2-methyl-8-hydroxyquinolin)zink, Tris(benzoylaceton)-mono(phenanthrolin)europium(III), Tris(benzoylmethan)mono(phenanthrolin)europium(III), Tris(benzoylmethan)mono(5-aminophenanthrolin)europium(III), Tris(dinaphthylmethan)-mono(phenanthrolin)europium(III), Tris(diphenylmethan)mono(phenanthrolin)europium(III), Tris[di(4-(2-(2-ethoxyethoxy)ethoxy)benzylmethan)]mono(phenanthrolin)europium(III), Tris(dibenzoylmethan)mono(4,7-diphenylphenanthrolin)europium(III), Bis(2-methyl-quinolinolato)(phenolato)aluminium(III) (vgl. Y. QIU et al., J. Appl. Phys. 39:1151-1153 (2000)), Tris(8-hydroxyquinolinato)aluminium(III) (vgl. J. Kalinowski et al., Chemical Physics Letters 380(5-6):710-715 (2003)), Tris(8-hydroxyquinolinato)gallium(III), Platin(III)[2-(4,6-difluorophenyl)pyridinato-N,C2)(acetyl-acetonat), Iridium(III)bis(2-(4,6-difluorophenyl)pyridinato-N,C2), Iridium(III)tris(2-(4-totyl)pyridinato-N,C2, Iridium(III)bis(2-(2'-benzothienyl)pyridinato-NC3')(acetyl-acetonat), Tris(1-phenylisoquinolin)iridium(III), Bis(1-phenylisoquinolin)(acteylacetonat)iridium(III), Iridium(III)bis(dibenzo[f,h]-quinoxalin) (acetylacenton), Iridium(III)bis(2-methyldibenzo[f,h]-quinoxalin)(acetylacetonat), Bis(2-(9,9-dibutylfluorenyl)-1-isoquinolin(acetylacetonat)iridium(III), Bis(2-(9,9-dihexylfluorenyl)-1-pyridin(acetylacetonat)iridium(III), Tris(3-methyl-1-phenyl-4-trimethylacetyl-5-pyrazolin)terbium(III), Tetraphenylporphyrin, Tetraphenylbutadien, Tris(2-phenylpyridin)iridium(III), Derivate von Tris(2-phenylpyridin)iridium(III), welche einfach oder zweifach am Phenylring an beliebiger Position methyliert oder halogeniert, insbesondere flouriert sind, Bis(2-phenylpyridin)Iridium, Platin-Octaethylporphin, Europium-tris(dibenzoylmethan)-basierte Verbindungen, wie Europium-tris(dibenzoylmethan)-(dipyrido(3,2a-2',3'-c)phenazin), Europium-tris(dibenzoylmethan)-(1,10-phenanthrolin), Europium-tris(dibenzoylmethan)-(2-(2-pyridyl)benzoxazol), Europium-tris(dibenzoylmethan)-(2-(2-pyridyl)benzothiazol), Terbium-(acetylaceton)3-(1,10-phenanthrolin), Dimethylphthalat (DMP), N,N-Bis(4-methyl-phenyl)-4-anilin und Farbstoffe, wie sie in S. Schrade, Proc. SPIE, Photonic Material and Devices, V 2003, 4991, 45 beschrieben werden.

Beispiele polymerer organischer Farbstoffe umfassen Poly(p-phenylen-vinylen) (PPV), alkylsubstituierte, insbesondere dialky-, beispielsweise dimethyl-, diethyl- oder dibutyl-substituierte Poly(p-phenylen-vinylen)-Derivate (Substituenten in para-Stellung), Poly[2-methoxy-5-(3,7-dimethyloctyloxy)-p-phenylen-vinylen] und Derivate, Poly[2-methoxy-5-(2'-ethylhexyloxy)-p-phenylen-vinylen] und Derivate, Polyfluoren, Poly(9,9-dialkylflourenyl-2,7-diyl) und Derivate, insbesondere Poly(9,9-dioctylflourenyl-2,7-diyl), Poly[9,9-di(2-ethylhexyl)-fluorene,2,7-diyl] oder Poly(9,9-di{2-[2-(2-methoxy-ethoxy)ethoxy]ethyl}flourenyl-2,7-diyl) und Derivate, Poly-N-vinylcarbazol, Poly(p-phenylen), alkylsubstituierte, insbesondere 2,5-dialky-, beispielsweise dimethyl-, diethyl- oder dibutyl-substituierte Poly(p-phenylen)-Derivate, Poly[2-(6-cyano-6-methyl-heptyloxy)-1,4-phenylen], Poly(2,5-dioctyl-1,4-phenylen) und Derivate, Poly(spiroflouren), Spiro(flouren-benzoflouren), spiroflouren-basierte Polymere, wie sie beispielsweise in US 7,524,567 B2 oder H. Becker et al., Proc. SPIE 4464:49-58 (2002) beschrieben sind, Poly(p-phenylene) und Poly(flourene), wie sie in R. Fiesel et al., Angew. Chem. 108:2233 (1996) beschrieben sind, Polythiophen und Derivate sowie einfach oder zweifach substituierte Copolymere gemäß A. Holmes et al., Proc. SPIE 4464:42-48 (2002). Als Copolymere kommen beispielsweise in Frage Poly[9,9-dioctyl-2,7-divinylen-flourenylen)-alt-co(9,10-anthracen)], Poly[9,9-dioctyl-2,7-divinylen-flourenylen)-alt-co{2-methoxy-5-(2-ethylhexyloxy)-1,4-phenylen}], Poly[(9,9-dioctylflourenyl-2,7-diyl)-co-(1,4-vinylen-phenylen)], Poly[(9,9-dioctylflourenyl-2,7-diyl)-co-1,4-benzo-{2,1'-3}-thiadiazol], Poly[(9,9-dihexylflourenyl-2,7-diyl)-co-(2-methoxy-5-{2-ethylhexyloxy}-1,4-phenylen)], Poly[(9,9-dihexylflourenyl-2,7-diyl)-co-(2,5-9-xylol)], Poly[(9,9-di(3,3'-N,N'-trimethylammonium)-propylfluorenyl-2,7-diyl)-alt-(9,9-dioctylflourenyl-2,7-diyl)], Poly[(9,9-dioctylflourenyl-2,7-diyl)-co-(N,N'-diphenyl)-N,N'-di(p-butyl-oxyphenyl)-1,4-diaminobenzol)] sowie Poly[(9,9-dioctylflourenyl-2,7-diyl)-co-(1,4-benzo-{2,1',3}-thiadiazol)] (9:1) und Derivate.

Im Rahmen der Erfindung kommen für Quantenpunkte alle Materialien in Frage, welche insbesondere Bandlücken bzw. Excitonenenergien im Bereich 1,5 bis 3,5 eV aufweisen. Typische Materialien sind CdS, CdSe, CdTe, ZnS, ZnSe, ZnTe, HgS, HgSe, HgTe CdZnSe, CdSeS, InAs, InP, GaAs, GaP, InGaAs, InGaP, generell auch alle Halbleitermaterialien, welche im Bereich der Luminszenzdioden Verwendung finden, insbesondere Gruppe III/V Halbleiter mit den Gruppe III Elementen Al, Ga und In sowie den Gruppe V Elementen N, P, As und Sb. Dabei können aus den besagten Elementen binäre, ternäre und quaternäre (und auch höherkomplex) in beliebiger Kombination gebildet werden, wobei lediglich das molare Verhältnis der Gruppe III Elemente zu den Gruppe V Elementen bei 1:1 liegt. Für alle angesprochenen Materialien sind ggf. auch Dotierungen möglich mit Atomen, welche keiner der genannten Elementgruppen angehören. Des Weiteren können auch Kern/Schale-Partikel, zum Beispiel CdSe/ZnS, verwendet werden. Andere Materialien umfassen Phosphor Nanopartikel, welche mit einem Seltenerde-Element dotiert sind. Verschiedene Cd-freie Quantum Dots sind beispielsweise von der Firma Nanoco Technologies Ltd., Manchester, UK, Strem Chemicals Inc., oder der Firma Aldrich Materials Science erhältlich.

Weitere Beispiele für geeignete Farbstoffe lassen sich den Absätzen [0040] bis [0045] der EP 2 078 068 B1 entnehmen, deren Inhalt hiermit vollumfänglich einbezogen wird.

Der elektrolumineszierende Farbstoff wird vorzugsweise derart ausgewählt, dass ein HOMO/LUMO-Abstand im Bereich von 1,5 bis 3,5 eV liegt. Hierdurch wird ein passiver Betrieb des EL-Bauelements erleichtert. Spannungen zum Betrieb des EL-Bauelements, insbesondere FIPEL-Bauelements, liegen vorzugsweise im Bereich von $10^6$ bis $10^8$ V/m.

Die dielektrische Matrix, in die der Farbstoff und gegebenenfalls das Additiv eingebettet sind, ist ein transparentes dielektrisches Material, insbesondere ein Polymer. Beispiele für geeignete polymere Materialien umfassen Polyvinylfluorid (PVF), Polytetrafluorethylen (PTFE) und Polymethacrylat (PMA), Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate. Weitere geeignete Matrixmaterialien sind dem Absatz [0049] der EP 2 078 068 B1 sowie der EP 0 688 839 A2, hier insbesondere der Binder gemäß Formel (I), zu entnehmen, deren Inhalte hiermit vollumfänglich einbezogen werden.

Als Elektrodenmaterial und Material für die weiteren Bestandteile der Schaltung (Leiterbahnen, Antenne, etc.) können Metalle, Metalloxide, leitfähige kohlenstoffhaltige Materialien und leitfähige Polymere Verwendung finden. Besonders geeignete Metalle umfassen Au, Ag, Al und Cu. Zur Herstellung transparenter Elektroden und Leiterbahnen eignen sich insbesondere transparente Metalloxide, wie zum Beispiel Indiumzinnoxid (ITO), Indiumzinkoxid (IZO), Indiumantimonoxid (IAO), antimondotiertes Indiumoxid, antimondotiertes Indiumzinnoxid (IATO) und antimondotiertes Zinnoxid (ATO). Als kohlenstoffhaltige Materialien werden vorzugsweise Graphite oder Carbon Black eingesetzt. Leitfähige Polymere umfassen insbesondere Polyanilin (PANI) und besonderes bevorzugt Poly-3,4-ethylendioxythiophen Polystyrolsulfonat (PEDOT:PSS). Aus den genannten Materialien (insbesondere durch die Verwendung von nanoskaligen Materialien) lassen sich druckfähige Lösungen/Suspensionen herstellen. Leitfähige Polymere sind besonders bevorzugt, da sie eine geringe Brüchigkeit aufweisen und druckfähig sind.

Eine Auswahl der verwendeten Materialien für das EL-Bauelement, also insbesondere des Farbstoffs, des Additivs, der Elektroden, der integrierten Schaltung und der dielektrischen Matrix, erfolgt vorzugsweise unter dem Gesichtspunkt der Druckfähigkeit.

Ferner umfasst das Sicherheitselement vorzugsweise eine Antenne, die in das Sicherheits- oder Wertprodukt eingebettet und elektrisch leitend mit den Elektroden verbunden ist. Vorzugsweise sind jedoch die Elektroden selbst derart geometrisch ausgestaltet, dass sie als Antennen agieren können - die Elektroden sind demnach ein integraler Bestandteil der Antenne. Nach einer weiteren bevorzugten Ausgestaltung der Erfindung sind Antenne und EL-Bauelement zwar auf demselben Substrat angeordnet, sind aber in einem ersten Zustand nicht elektrisch leitend miteinander verbunden. Antenne und EL-Bauelement weisen jedoch Kontaktflächen auf, die in einem zweiten Zustand aneinander liegen und so eine elektrische Verbindung erstellen. Der Wechsel zwischen dem ersten und zweiten Zustand kann derart erfolgen, dass das Substrat, zum Beispiel eine Banknote, an definierter Stelle gefaltet wird. Eine Anregungsfrequenz der Antenne kann frei vorgegeben werden und hängt maßgeblich von der konkreten Ausgestaltung des EL-Bauelements ab, d. h. der Struktur der Verbundschicht und den gewählten Materialien für die dielektrische Matrix, elektrolumineszierenden Farbstoff, Elektroden und Additiv. Besonders bevorzugt ist es, das EL-Bauelement und die Antenne so auszulegen, dass eine Anregungsfrequenz der Antenne einem RFID-Standard entspricht. Die Induktivität L der Antenne und die Kapazität C des EL-Bauelements bilden hier einen Schwingkreis. Die Resonanzfrequenz dieses Parallelschwingkreises errechnet sich vereinfacht durch: $f_{res} = \frac{1}{2 \cdot \pi \cdot \sqrt{L \cdot C}}$. Hierbei sind die beiden Bauelemente bevorzugt so zu dimensionieren, dass die Resonanzfrequenz des Schwingkreises der Frequenz der Anregungsquelle entspricht. Auf diese Weise können bereits im Markt etablierte Anregungsquellen genutzt werden. Des Weiteren sind so keinerlei zusätzliche Dioden oder Gleichrichterbauelemente für den Betrieb des Sicherheitselementes notwendig. Bekannte RFID Tags arbeiten im Bereich der Langwelle bei 125 bis 134 KHz, der Kurzwelle bei 13,56 MHz (z.B. NFC-Protokoll), der UHF bei 865 - 869 MHz (europäische Frequenzen) beziehungsweise 950 MHz (US-amerikanische und asiatische Frequenzbänder) oder der SHF bei 2,54 GHz und 5,8 GHz. Mit anderen Worten, die kontaktlose Energieversorgung kann analog dem bekannten RFID-Verfahren erfolgen, wobei die Kopplung durch ein von einem Lesegerät erzeugtes magnetisches Wechselfeld geringer Reichweite oder durch hochfrequente Radiowellen geschieht. Beispiele dafür, wie sich eine solche Kopplung in Sicherheits- oder Wertprodukten realisieren lässt, können unter anderem DE 10 2010 003 853 A1 entnommen werden.

Nach einer weiteren bevorzugten Ausgestaltung der Erfindung ist der Farbstoff in der Verbundschicht des EL-Bauelementes entsprechend einem vorgebbaren Muster angeordnet. Mit anderen Worten, der Farbstoff liegt strukturiert in der Verbundschicht vor. Auf diese Weise können Symbole oder andere Informationen in einfacher Weise angezeigt werden. Alternativ ist ein lichtemittierender Bereich des EL-Bauelementes mit einer zusätzlichen, strukturierten Maskierung abgedeckt. Das von der Verbundschicht emittierte Licht wird demnach in Teilen durch die Maskierung abschirmt, so dass sich wiederum in sehr einfacher Weise über die vorgegebene Strukturierung der Maskierung Symbole und Informationen darstellen lassen. In einer Fortbildung der zuletzt genannten Ausführungsform bildet eine der Elektroden selbst die Maskierung. Mit anderen Worten, auf eine zusätzliche Maskierung kann hier verzichtet werden und es wird vielmehr eine nicht-transparente Elektrode zur Darstellung von Symbolen oder Information entsprechend strukturiert.

Wert- und/oder Sicherheitsprodukte im erfindungsgemäßem Sinne umfassen beispielsweise Reisepässe, Personalausweise, Führerscheine, Zugangskontrollausweise oder andere ID-Karten, Fahrzeugscheine, Fahrzeugbriefe, Visa, Schecks, Zahlungsmittel, insbesondere Banknoten, Scheck-, Bank-, Kredit- oder Barzahlungskarten, Kundenkarten, Gesundheitskarten, Chipkarten, Firmenausweise, Berechtigungsnachweise, Mitgliedsausweise, Geschenk- oder Einkaufsgutscheine, Frachtbriefe, Steuerzeichen, Postwertzeichen, Tickets, (Spiel-)Jetons, Urkunden oder Haftetiketten (beispielsweise zur Produktsicherung). Bevorzugt ist der Einsatz in Banknoten und Visa. Das erfindungsgemäß eingesetzte elektrolumineszierende Sicherheitselement kann beispielsweise als Aufkleber, Etikett oder dergleichen ausgeführt sein, das mit einem Vorprodukt des Wert- oder Sicherheitsprodukts unlösbar verbunden werden kann, um das Wert- oder Sicherheitsprodukt zu bilden. Das Sicherheitselement kann bevorzugt auf einem Kunststoffpatch realisiert werden, zum Beispiel einem Hologrammstreifen oder einem Hologrammpatch.

Das Sicherheitselement kann quadratisch ausgeführt sein. In diesem Fall hat das Sicherheitselement bevorzugt eine Größe von 1 mm x 1 mm bis 100 mm x 100 mm, besonders bevorzugt eine Größe von 7 mm x 7 mm bis 12 mm x 12 mm, zum Beispiel 10 mm x 10 mm. Es sind jedoch auch runde, ovale, rechteckige, sternförmige oder anders geartete Formen möglich. Bevorzugt weist das Sicherheitselement entlang der größten Ausdehnung eine Größe von 1 mm bis 100 mm, besonders bevorzugt von 7 mm bis 12 mm auf und entlang der geringsten Ausdehnung eine Größe von 1 mm bis 100 mm, besonders bevorzugt von 7 mm bis 12 mm auf.

Das Wert- oder Sicherheitsprodukt kann insbesondere eine Smartcard sein. Das Wert- oder Sicherheitsprodukt kann ferner im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Wert- oder Sicherheitsprodukte sind häufig Laminate aus mehreren Dokumentenlagen, die passgenau unter Wärmeeinwirkung und unter erhöhtem Druck flächig miteinander verbunden worden sind. Diese Produkte sollten insbesondere den normierten Anforderungen genügen, vorzugsweise ISO 10373, ISO/IEC 7810 und ISO 14443. Die Dokumentenlagen bestehen insbesondere aus einem Trägermaterial, das sich für die Lamination eignet.

Das Wert- oder Sicherheitsprodukt kann ganz oder in Teilen auf Basis eines Polymers hergestellt werden, das ausgewählt ist aus einer Gruppe umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Den Polymeren können übliche Additive zugesetzt werden, wie insbesondere Dispergiermittel, Farbstoffe und Stabilisatoren. Das Produkt kann ferner einen Schutz- oder Decklack aufweisen. Bevorzugt wird das Produkt aus 3 bis 12, vorzugsweise 4 bis 10 Dokumentenlagen/Folien hergestellt, wobei einzelne Dokumentenlagen/Folien bedruckt sein können. Ein solcherart gebildetes Laminat kann abschließend ein- oder beidseitig mit dem Schutz- oder Decklack überzogen werden. Derart gebildete sogenannte Overlaylagen schützen ein darunter angeordnetes Sicherheitsmerkmal und/oder verleihen dem Dokument die erforderliche Abriebfestigkeit. Das Sicherheitsmerkmal befindet sich vorzugsweise auf einer der inneren Lagen/Folien.

Ein Beispiel für ein Druckverfahren zur Herstellung eines Polycarbonat-Schichtverbundes für ein Wert- und Sicherheitsprodukt lässt sich DE 10 2007 052 947 A1 entnehmen.

Ein weiterer Aspekt der Erfindung liegt in der Bereitstellung eines Verfahrens zur Herstellung des vorab beschriebenen Sicherheits- oder Wertprodukts. Das Verfahren zeichnet sich dadurch aus, dass das EL-Bauelement über ein Druckverfahren erzeugt wird. Es kann hierzu auf übliche Druckverfahren, zum Beispiel das Siebdruckverfahren, zurückgegriffen werden. Ein Beispiel für ein nach einem Druckverfahren hergestelltes Wert- und Sicherheitsprodukt lässt sich wiederum DE 10 2007 052 947 A1 entnehmen. Analog dem dort beschriebenen Verfahren kann insbesondere die Verbundschicht des EL-Bauelements erzeugt werden. Die zur Herstellung der Komponenten des EL-Bauelements notwendigen Materialien werden als Tinte bereitgestellt, die im Druckprozess über eine Druckplatte aufgetragen wird.

## Kurzbeschreibung der Figuren

Die Erfindung wird nachfolgend anhand von Ausführungsbeispielen und den dazugehörigen Zeichnungen näher erläutert. Es zeigen:

Figur 1     eine schematische Schnittdarstellung durch ein passives elektrolumineszierendes Sicherheitselement mit einem feldinduzierten EL-Bauelement, das nicht unter die vorliegende Erfindung fällt;

Figur 2     eine schematische Schnittdarstellung durch ein passives elektrolumineszierendes Sicherheitselement mit einem feldinduzierten EL-Bauelement gemäß einer Ausführungsform;

Figur 3     ein Sicherheits- oder Wertprodukt mit einem erfindungsgemäßen passiven elektrolumineszierenden Sicherheitselement;

Figuren 4A bis     4C, 5A bis 5C, 6, 7A, 7B, 8 und 9 weitere Ausführungsformen des erfindungsgemäßen passiven elektrolumineszierenden Sicherheitselements; und

Figur 10     eine Banknote mit einer weiteren Variante des erfindungsgemäßen passiven elektrolumineszierenden Sicherheitselements.

## Detaillierte Beschreibung der Erfindung

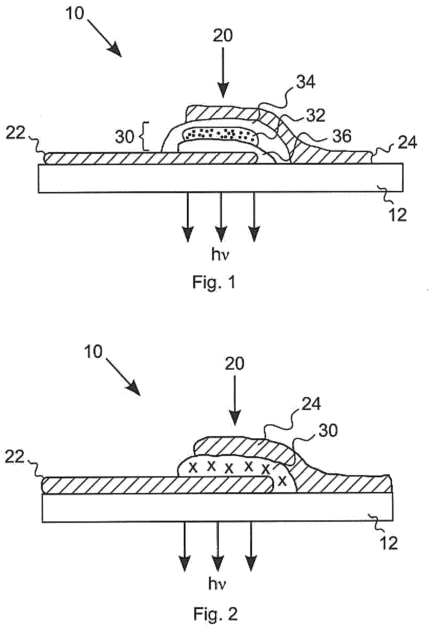

Figur 1 stellt - stark schematisiert - eine Schnittansicht durch ein elektrolumineszierendes Sicherheitselement 10 eines Wert- oder Sicherheitsprodukts dar, das hinsichtlich der Ausgestaltung seines EL-Bauelements 20 nicht unter die Erfindung fällt. Das Sicherheitselement 10 ist auf einem Substrat 12 aufgebracht, welches wiederum Teil des hier nicht näher dargestellten Sicherheits- oder Wertproduktes ist. Gemäß der vorliegenden Ausführungsform besteht das Substrat 12 aus einem transparenten Material, durch das passiv im Sicherheitselement 10 erzeugtes Licht austritt.

Das Sicherheitselement 10 umfasst hier ein feldinduziertes polymeres elektrolumineszierendes Bauelement 20 (FIPEL-Bauelement). Letzteres beinhaltet auf seiner zum Substrat 12 zugewandten Seite eine transparente Elektrode 22 sowie eine weitere, gegebenenfalls ebenfalls transparent auslegbare Gegenelektrode 24. Zwischen den beiden Elektroden 22, 24 ist eine elektrolumineszierende Verbundschicht 30 angeordnet. Die Verbundschicht 30 wiederum enthält eine Teilschicht 32 aus einem transparenten dielektrischen Polymermaterial, in das ein elektrolumineszierender Farbstoff mit Additiven, die das elektrische Feld verstärken, eingebettet ist. Die Verbundschicht 30 umfasst hier ferner zwei weitere Teilschichten 34, 36 aus einem transparenten dielektrischen Polymermaterial, die die Teilschicht 32 gegenüber den Elektroden 22, 24 abschirmen. Beim Anliegen einer Wechselspannung wird in der Teilschicht 36 Licht erzeugt, das zumindest über die transparente Teilschicht 36 und transparente Elektrode 22 sowie das transparente Substrat 12 austritt.

Figur 2 zeigt eine erfindungsgemäße Ausführungsform des FIPEL-Bauelements 20 wiederum in einer stark schematisierten Schnittansicht. Gegenüber der Ausführungsform der Figur 1 ist lediglich die zwischen den beiden Elektroden 22 und 24 liegende Verbundschicht 30 abweichend ausgeführt. Die Verbundschicht 30 besteht hier nur aus einer einzigen Lage (Schicht) aus einem dielektrischen transparenten Polymermaterial, in das der elektrolumineszierende Farbstoff und gegebenenfalls ein Additiv eingebettet sind.

Ausführungsbeispiel - Herstellung eines FIPEL-Bauelements

Das hergestellte FIPEL-Bauelement gemäß diesem Ausführungsbeispiel umfasste eine erste transparente Elektrode aus ITO, eine zweite Elektrode aus Gold und eine zwischen den beiden Elektroden angeordnete Verbundschicht. Die beiden Elektroden wurden in an sich bekannter Weise gedruckt, d.h. es wurden Tinten mit nanoskaligen Partikeln des Elektrodenmaterials aufgetragen. Zunächst wurde eine Indiumzinnoxid-haltige Tinte auf ein transparentes Substrat aus Polycarbonat zur Herstellung der ersten Elektrode gedruckt. Auf die erste Elektrode wurde dann - wiederum mittels eines Druckverfahrens - die Verbundschicht aufgetragen. Schließlich wurde mit einer Goldpartikel-haltigen Tinte die zweite Elektrode im Druckverfahren erzeugt. Die beiden Elektrodenschichten können auch in herkömmlichen Verfahren aufgebracht werden, d.h. ITO durch Sputtern und Gold durch thermisches Verdampfen.

Konkret wurde die Verbundschicht auf Basis eines dielektrischen transparenten Polymermaterials - hier eines Polycarbonatderivats - hergestellt. In das transparente Polymermaterial wurde ein elektrolumineszierender Stoff eingebettet:

Es wurde ein Gemisch aus 17,5 Gew.% des Polycarbonatderivats (einer Mischung von 149,0 g (0,65 Mol) Bisphenol A (2,2-Bis-(4-hydroxyphenyl)-propan und 107,9 g (0,35 Mol) 1,1-Bis-(4-hydroxyphenyl)-3,3,5-trimethylcyclohexan) und 82,5 Gew.% einer Lösung gemäß nachfolgender Tabelle hergestellt:

| Komponente | Gew.% |
|---|---|
| Mesitylen (1,3,5-Trimethylbenzol) | 2,40 |
| 1-Methoxy-2-propanolacetat | 34,95 |
| 1,2,4-Trimethylbenzol | 10,75 |
| Ethyl-3-ethoxypropionat | 33,35 |
| Cumol | 0,10 |
| Solvent Naphtha | 18,45 |

Zu 90 Gew.-% dieses Gemischs wurden 10 Gew.-% einer Lösung des elektrolumineszierenden Stoffs unter Rühren zugesetzt (2,5 Gew.-% Iridium(III)tris(2-(4-totyl)pyridinato-N,C2) in Toluol). Die erhaltende Tinte wurde mittels Siebdruck zur Herstellung der Verbundschicht aufgetragen. Es konnten homogene Schichtdicken von etwa 1 $\mu$m erzeugt werden.

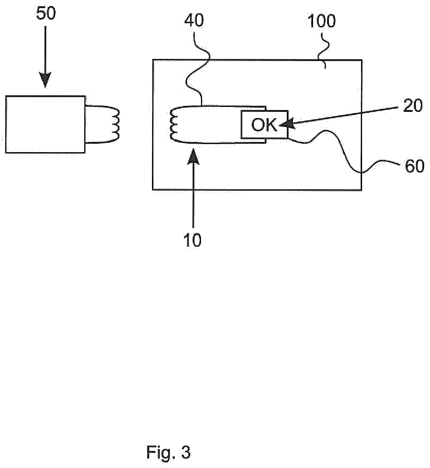

Figur 3 zeigt ein erfindungsgemäßes Sicherheits- oder Wertprodukt in einer konkreten Ausführungsform. Das Sicherheits- oder Wertprodukt 100 ist hier als Smartcard ausgeführt und beinhaltet das passive elektrolumineszierende Sicherheitselement 10 mit einem FIPEL-Bauelement 20, wie es beispielhaft in Figur 2 beschrieben wurde und/oder gemäß dem vorangegangenem Ausführungsbeispiel konkret ausgestaltet werden kann. Das Sicherheitselement 10 weist ferner eine Antenne 40 auf, an der die beiden Elektroden des FIPEL-Bauelements 20 angeschlossen sind. Mit einem geeigneten Lesegerät 50 wird die Antenne 40 angeregt und die zum Betrieb des FIPEL-Bauelementes 20 notwendige Spannung induziert. Dabei bildet die elektrolumineszierende Verbundschicht des FIPEL-Bauelements 20 die Kapazität und die Elektroden als Antenne die Induktivität.

Der emittierende Bereich des FIPEL-Bauelementes 20 weist zusätzliche eine Maskierung 60 zur Strukturierung der Lichtemission auf, so dass hier beispielhaft das Wort OK bei Aktivierung des elektrolumineszierenden Sicherheitselements 10 leuchtend angezeigt wird.

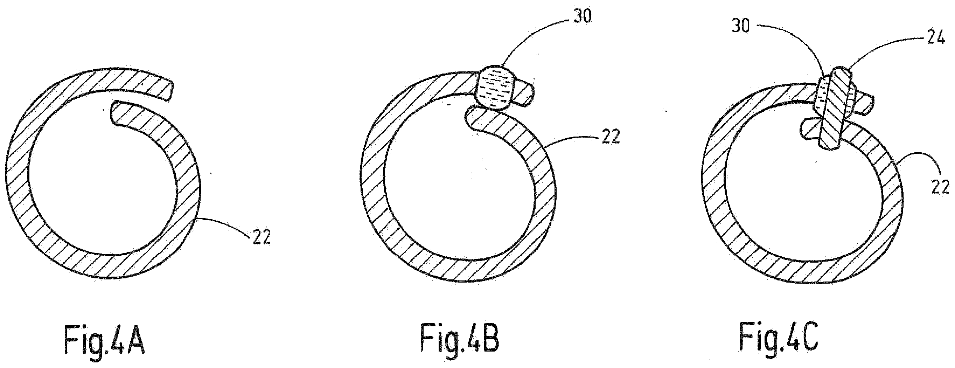

Die Figuren 4A bis 4C illustrieren in drei Teildarstellungen Verfahrensschritte zum Herstellen eines Sicherheitselementes. Die in Figur 4A dargestellte erste Elektrode 22 hat eine offen ringförmige Kontur mit einer Windung. Gemäß dieser Ausführungsform bildet die erste Elektrode 22 gleichzeitig eine Antennenschleife und bildet damit die Induktivität.

Mit anderen Worten, auf eine separate Antenne kann in diesem Fall verzichtet werden. Die erste Elektrode 22 kann aus ITO bestehen.

Auf die erste Elektrode 22 wird nachfolgend die elektrolumineszierende Verbundschicht 30 aufgetragen, die vorliegend nur aus einer einzigen Schicht aus dielektrischer Matrix, beispielsweise eine PVK/PS-Matrix, mit eingebettetem elektrolumineszierenden Farbstoff, zum Beispiel IrPPy3, besteht (Figur 4B).

Schließlich wird die der zweiten Elektrode 24, beispielsweise aus Silber, auf die Verbundschicht 30 aufgesetzt (Figur 4C). Der Aufbau kann selbstverständlich auch in umgekehrter Reihenfolge, also beginnend mit der zweiten Elektrode 24, erfolgen. In diesem Fall kann die Elektrode 24 beispielsweise aus ITO und die Elektrode 22 aus Silber bestehen.

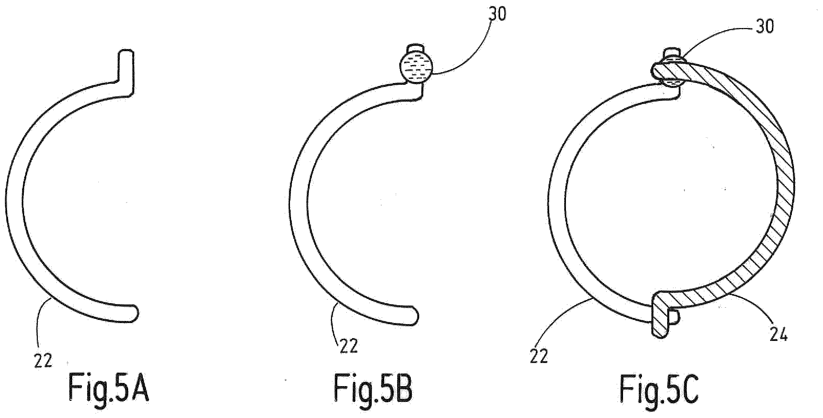

Die Figuren 5A bis 5C illustrieren ebenfalls in drei Teildarstellungen Verfahrensschritte zum Herstellen eines Sicherheitselementes. Die Herstellung erfolgt analog zu der in den Figuren 4A bis 4C dargestellten Verfahrensweise. Die beiden Elektroden 22, 24 bilden hier jeweils Halbkreise, die zusammengesetzt eine Spule mit der Windungsanzahl 1 ergeben. Die beiden Elektroden 22, 24 fungieren also erneut auch als Antenne.

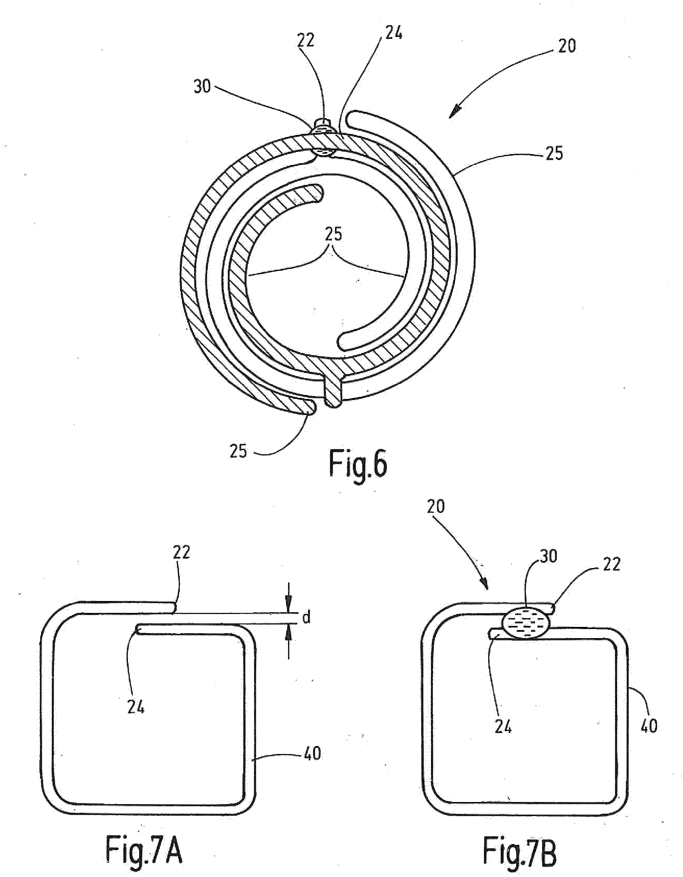

Fig. 6 zeigt ein EL-Bauelement 20 eines Sicherheitselements, bei dem die beiden Elektroden 22, 24 zusätzliche Blindwindungen 25 aufweisen. Diese Blindwindungen 25 erhöhen die Kapazität des Schwingkreises und verringern dadurch die zur Erreichung der Resonanzfrequenz und zur optimalen Einkopplung der Energie erforderliche Induktivität.

Die Figuren 7A und 7B zeigen ein weiteres Ausführungsbeispiel eines EL-Bauelements 20 mit noch weiter vereinfachtem Herstellungsverfahren. Hier wird das EL-Bauelement 20 in nur zwei Verfahrensschritten erzeugt: einem ersten Schritt der Elektroden-Applizierung (Figur 7A) und einem zweiten Schritt der Verbundschicht-Applizierung (Figur 7B). Die elektrolumineszierende Verbundschicht 30 wird dabei nicht von unten und oben von Elektroden 22, 24 bedeckt, sondern die Verbundschicht 30 wird direkt auf die Elektroden 22, 24 aufgebracht. Hier bilden also die Leiterenden der ringförmigen Antenne 40 die Elektroden 22, 24. Dazu ist ein geringer Abstand d der Elektroden 22, 24 zwischen 100 nm und 1000 nm erforderlich. Die Verbundschicht 30 zwischen den Elektroden 22, 24 bildet somit wieder die Kapazität des EL-Bauelements 20.

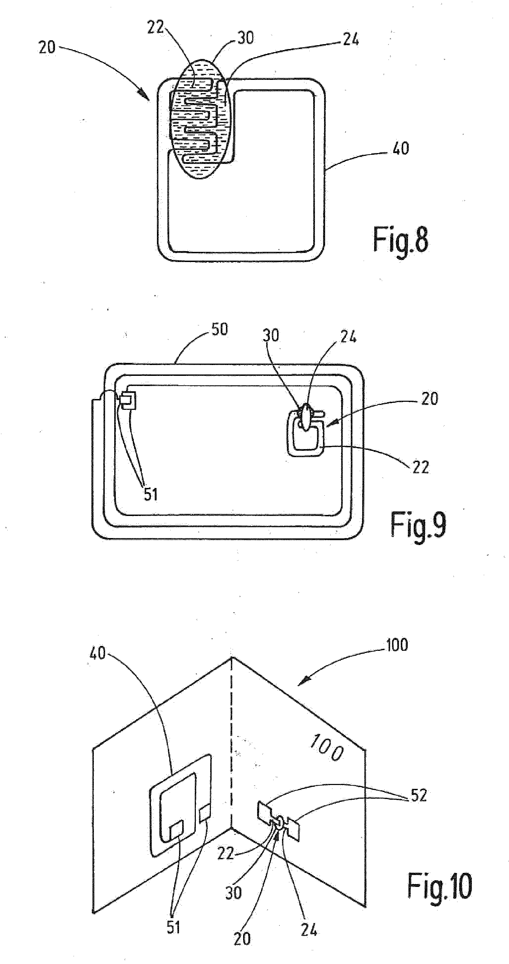

Figur 8 zeigt eine Weiterführung der in Figur 7B dargestellten Ausführungsform des EL-Bauelements 20. Die beiden Elektroden 22, 24 haben jeweils eine kammartige Kontur, die so ineinandergreifend angeordnet werden, dass sich ein schmaler Kanal mit mäanderförmigen Verlauf bildet. Eine Breite des Kanals liegt zwischen 100 nm und 1000 nm. Dadurch werden sowohl der leuchtende Bereich als auch die notwendige Kapazität gegenüber der Ausführungsform der Figur 7B vergrößert.

Zur weiteren Erhöhung der in das EL-Bauelement 20 eingekoppelten Energie kann eine zusätzliche Verstärkerantenne 50 mit zwei als Elektroden fungierenden Kontaktflächen 51 eingesetzt werden (Figur 9). Im dargestellten entfaltetem Zustand bilden die beiden Kontaktflächen 51 der Verstärkerantenne 50 einen Kondensator. Das EL-Bauelement 20 weist komplementäre Kontaktflächen auf seinen Elektroden 22, 24 auf. Nach dem Zusammenfalten liegen die Kontaktflächen 51 der Verstärkerantenne 50 an den Kontaktflächen des EL-Bauelements 20 und sorgen so für eine elektrische Verbindung der Komponenten. Mit Hilfe der Verstärkerantenne 50 kann ein helleres Leuchten des Sicherheitselementes erreicht werden oder ein größerer Abstand vom Lesegerät realisiert werden.

Figur 10 zeigt eine Banknote 100 mit einem passiven Sicherheitselement, bei dem die Antenne 40 und das EL-Bauelement 20 räumlich getrennt auf dem Substrat angeordnet sind. Die Antenne 40 und die Elektroden 22, 24 weisen komplementär angeordnete Kontaktflächen 51, 52 auf. Die Antenne 40, Elektroden 22, 24 und Kontaktflächen 51, 52 können in einem gemeinsamen Herstellungsschritt erstellt werden. Die geometrische Gestaltung der Antenne 40 kann somit wesentlich unabhängiger von der Lage des EL-Bauelements 20 erfolgen und in der Regel können so mehr Antennenwindungen realisiert werden. Der Schaltkreis des EL-Bauelements 20 wird erst durch ein Zusammenfalten der Banknote geschlossen und kann dann durch Heranführen an ein Lesegerät aktiviert werden. Dabei sorgen die jeweiligen Kontaktflächen 51, 52 für eine elektrische Verbindung von Antenne 40 und EL-Bauelement 20. Auf diese Weise kann zum Beispiel ein ungewolltes Leuchten und eine mögliche Degradation des EL-Bauelementes 20 wirksam verhindert werden.

**Patentansprüche**

1. Sicherheits- oder Wertprodukt (100) mit einem passiven, elektrolumineszierenden Sicherheitselement (10), das ein feldinduziertes elektrolumineszierendes Bauelement (20) (EL-Bauelement) umfasst, wobei das EL-Bauelement (20) eine zwischen zwei Elektroden (22, 24) angeordnete elektrolumineszierende Verbundschicht (30) enthält, die zumindest einen in ein transparentes dielektrisches Material eingebetteten elektrolumineszierenden Farbstoff aufweist, **dadurch gekennzeichnet, dass** die Verbundschicht (30) aus nur einer einzigen Schicht besteht, die direkt an die Elektroden (22, 24) grenzt.

2. Sicherheits- oder Wertprodukt nach Anspruch 1, bei dem das Sicherheitselement (10) eine Antenne (40) umfasst, die in das Sicherheits- oder Wertprodukt (100) eingebettet und elektrisch leitend mit den Elektroden (22, 24) verbunden ist.

3. Sicherheits- oder Wertprodukt nach Anspruch 2, bei dem eine Anregungsfrequenz der Antenne (40) einem RFID-Standard entspricht.

4. Sicherheits- oder Wertprodukt nach Anspruch 2, bei dem die Elektroden (22, 24) ein integraler Bestandteil der Antenne (40) sind.

5. Sicherheits- oder Wertprodukt nach Anspruch 1, bei dem der elektrolumineszierende Farbstoff eine organische oder metallorganische Verbindung ist.

6. Sicherheits- oder Wertprodukt nach Anspruch 5, bei dem der elektrolumineszierende Farbstoff einen HOMO/LUMO-Abstand im Bereich von 1,5 bis 3,5 eV aufweist.

7. Sicherheits- oder Wertprodukt nach Anspruch 1, bei dem der elektrolumineszierende Farbstoff in der Verbundschicht (30) entsprechend einem vorgebbaren Muster angeordnet ist.

8. Sicherheits- oder Wertprodukt nach Anspruch 1, bei dem ein lichtemittierender Bereich des EL-Bauelements (20) von einer strukturierten Maskierung (60) abdeckt ist.

9. Sicherheits- oder Wertprodukt nach einem der vorhergehenden Ansprüche, bei dem das EL-Bauelement (20) ein FIPEL-Bauelement ist.

10. Verfahren zur Herstellung eines Sicherheits- oder Wertprodukt (100) mit einem passiven, elektrolumineszierenden Sicherheitselement (10), das ein feldinduziertes elektrolumineszierendes Bauelement (20) (EL-Bauelement) umfasst, wobei das EL-Bauelement (20) eine zwischen zwei Elektroden (22, 24) angeordnete elektrolumineszierende Verbundschicht (30) enthält, die zumindest einen in ein transparentes dielektrisches Material eingebetteten elektrolumineszierenden Farbstoff aufweist, und wobei die Verbundschicht (30) aus nur einer einzigen Schicht besteht, wobei das EL-Bauelement (20) über ein Druckverfahren erzeugt wird, **dadurch gekennzeichnet, dass** die Verbundschicht direkt an die Elektroden grenzt.

## Claims

1. Security product or valuable product (100), having a passive, electroluminescent security element (10), comprising a field-induced electroluminescent component (20) (EL component), wherein said EL component (20) contains an electroluminescent composite layer (30), which is arranged between two electrodes (22, 24) and which comprises at least one electroluminescent dye embedded in a transparent dielectric material, **characterized in that** the composite layer (30) consists of only a single layer, which directly adjoins the electrodes (22, 24).

2. Security product or valuable product according to Claim 1, in which the security element (10) comprises an antenna (40), which is embedded into the security product or valuable product (100) and is electrically conductively connected to the electrodes (22, 24).

3. Security product or valuable product according to Claim 2, in which an excitation frequency of the antenna (40) conforms to an RFID standard.

4. Security product or valuable product according to Claim 2, in which the electrodes (22, 24) are an integral component of the antenna (40).

5. Security product or valuable product according to Claim 1, in which the electroluminescent dye is an organic or metal-organic compound.

6. Security product or valuable product according to Claim 5, in which the electroluminescent dye comprises a HOMO/LUMO gap in the range from 1.5 to 3.5 eV.

7. Security product or valuable product according to Claim 1, in which the electroluminescent dye is arranged in the composite layer (30) according to a pre-definable pattern.

8. Security product or valuable product according to Claim 1, in which a light-emitting region of the EL component (20) is covered by a structured masking layer (60).

9. Security product or valuable product according to any of the previous claims, in which the EL component (20) is a FIPEL component.

10. Method for producing a security product or valuable product (100) having a passive, electroluminescent security element (10) comprising a field-induced electroluminescent component (20) (EL component), wherein said EL component (20) contains an electroluminescent composite layer (30), which is arranged between two electrodes (22, 24) and which comprises at least one electroluminescent dye embedded in a transparent dielectric material, and wherein the composite layer (30) consists of only a single layer, wherein said EL component (20) is generated using a printing method, **characterized in that** the composite layer directly adjoins the electrodes.

## Revendications

1. Produit de sécurité ou de valeur (100) comprenant un élément de sécurité (10) électroluminescent passif qui comprend un composant électroluminescent (20) (composant EL) à champ induit, dans lequel le composant EL (20) contient une couche composite (30) électroluminescente disposée entre deux électrodes (22, 24), qui présente au moins un colorant électroluminescent noyé dans un matériau diélectrique transparent, **caractérisé en ce que** la couche composite (30) est composée d'une seule couche qui est délimitée directement sur les électrodes (22, 24).

2. Produit de sécurité ou de valeur selon la revendication 1, dans lequel l'élément de sécurité (10) comprend une antenne (40) qui est noyée dans le produit de sécurité ou de valeur (100) et est reliée en conductibilité électrique avec les électrodes (22, 24).

3. Produit de sécurité ou de valeur selon la revendication 2, dans lequel une fréquence d'excitation de l'antenne (40) correspond à une norme RFID.

4. Produit de sécurité ou de valeur selon la revendication 2, dans lequel les électrodes (22, 24) sont une partie constituante intégrale de l'antenne (40).

5. Produit de sécurité ou de valeur selon la revendication 1, dans lequel le colorant électroluminescent est une liaison organique ou métallo-organique.

6. Produit de sécurité ou de valeur selon la revendication 5, dans lequel le colorant électroluminescent présente un écart HOMO/LUMO dans la plage de 1,5 à 3,5 eV.

7. Produit de sécurité ou de valeur selon la revendication 1, dans lequel le colorant électroluminescent est disposé dans la couche composite (30) selon un motif pré-définissable.

8. Produit de sécurité ou de valeur selon la revendication 1, dans lequel une partie émettrice de lumière du composant EL (20) est recouverte par un masquage (60) structuré.

**9.** Produit de sécurité ou de valeur selon l'une des revendications précédentes, dans lequel le composant EL (20) est un composant FIPEL.

**10.** Procédé de fabrication d'un produit de sécurité ou de valeur (100) comprenant un élément de sécurité (10) électroluminescent passif qui comprend un composant électroluminescent (20) (composant EL) à champ induit, dans lequel le composant EL (20) contient une couche composite (30) électroluminescente disposée entre deux électrodes (22, 24), qui présente au moins un colorant électroluminescent noyé dans un matériau diélectrique transparent, et dans lequel la couche composite (30) est composée d'une seule couche, dans lequel le composant EL (20) est produit par un procédé d'impression, **caractérisé en ce que** la couche composite est délimitée directement sur les électrodes.

Fig. 1

Fig. 2

Fig. 3

Fig.4A                     Fig.4B                     Fig.4C

EP 2 991 838 B1

Fig.5A  Fig.5B  Fig.5C

EP 2 991 838 B1

Fig.6

Fig.7A

Fig.7B

Fig.8

Fig.9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009038904 A1
- DE 19645084 A1
- EP 2078068 B1
- US 7524567 B2
- EP 0688839 A2
- DE 102010003853 A1
- DE 102007052947 A1

**In der Beschreibung aufgeführte Nicht-Patentliteratur**

- **Y. QIU et al.** *J. Appl. Phys.,* 2000, vol. 39, 1151-1153
- **J. KALINOWSKI et al.** *Chemical Physics Letters,* 2003, vol. 380 (5-6), 710-715
- **S. SCHRADE.** Photonic Material and Devices. *Proc. SPIE,* 2003, vol. 4991, 45
- **H. BECKER et al.** *Proc. SPIE,* 2002, vol. 4464, 49-58
- **R. FIESEL et al.** *Angew. Chem.,* 1996, vol. 108, 2233
- **A. HOLMES et al.** *Proc. SPIE,* 2002, vol. 4464, 42-48